# EUROPEAN PATENT APPLICATION

(11) **EP 4 563 047 A1**
(43) Date of publication of application: **04.06.2025**
(21) Application number: 23213641.6
(22) Date of filing: 01.12.2023
(51) Int. Cl.: A47J 43/046, A47J 43/07, A47J 43/08

(54) **DEVICE, IN PARTICULAR A FOOD PREPARATION DEVICE, COMPRISING A MAGNETIC COUPLING PART**

(71) Applicant: Versuni Holding B.V., 5656 AE Eindhoven (NL)
(72) Inventor: HIETBRINK, Ingrid, 5656 AE Eindhoven (NL)
(74) Representative: Vollering, Stefanus Franciscus Maria

(57) **Abstract**

Provided is a device (100), e.g. a food preparation device, comprising a magnetic coupling part (102) for magnetically coupling to a further coupling part (104) to define a magnetic coupling (102, 104) suitable for transferring drive from a motor assembly (106). The magnetic coupling part comprises a magnet assembly (110) for magnetically coupling to the further coupling part, and a shaft (114) rotatable about an axis (116) extending along the shaft. At least part of the magnet assembly is moveably mounted relative to the shaft to allow displacement of the at least part of the magnet assembly relative to, e.g. radially away from, the axis. The magnet assembly and the shaft are keyed to each other such that the magnet assembly is rotatable together with said rotation of the shaft, including when the at least part of the magnet assembly is displaced relative to the axis.

## Description

### FIELD OF THE INVENTION

The present invention relates to a device, in particular a food preparation device, comprising a magnetic coupling part for magnetically coupling to a further coupling part to define a magnetic coupling suitable for transferring drive from a motor assembly.

### BACKGROUND OF THE INVENTION

Various devices are known that include a magnetic coupling for transferring drive from a motor assembly. Such a magnetic coupling includes two coupling parts, with a first coupling part, in other words a driving coupling part, of the two coupling parts being mechanically coupled to the motor assembly, and a second coupling part of the two coupling parts, in other words the driven coupling part, being driven via magnetic interaction with the first coupling part.

### SUMMARY OF THE INVENTION

There may be a risk of the coupling parts being misaligned when the user wishes to couple the coupling parts to each other to define the magnetic coupling. Guidance for positioning the coupling parts relative to each other, e.g. mechanical guidance, may not be desirable or may not be possible. Moreover, friction between surfaces may hamper perfect self-alignment of the coupling parts.

Whilst some degree of misalignment may still allow the magnetic coupling to function, it would be desirable to provide an increased tolerance, in other words a larger acceptable misalignment, when the user positions the coupling parts on or in each other to define the magnetic coupling.

The invention is defined by the claims.

According to examples in accordance with an aspect of the invention, there is provided a food preparation device comprising: a magnetic coupling part for magnetically coupling to a further coupling part to define a magnetic coupling suitable for transferring drive from a motor assembly to move a device implement, the magnetic coupling part comprising: a magnet assembly for magnetically coupling to the further coupling part; and a shaft rotatable about an axis extending along the shaft, wherein at least part of the magnet assembly is moveably mounted relative to the shaft to allow displacement of the at least part of the magnet assembly relative to the axis, the magnet assembly and the shaft being keyed to each other such that the magnet assembly is rotatable together with said rotation of the shaft, including when the at least part of the magnet assembly is displaced relative to the axis.

Moveably mounting the at least part of the magnet assembly relative to the shaft in this manner may allow a larger tolerance when the user positions the magnetic coupling part and the further part on or in each other to define the magnetic coupling. This is because the at least part, e.g. the entirety, of the magnet assembly may be displaceable towards the misaligned further coupling part.

This may make the device more convenient to use and/or may assist to minimize decrease of performance and operating lifetime of the device.

It is noted that the shaft may mechanically couple the motor assembly or the device implement to the magnet assembly.

Thus, the magnetic coupling part may be a driving or a driven magnetic coupling part.

It is also noted that the magnet assembly may include magnet(s) of any suitable type. In some embodiments, the magnet assembly includes permanent magnets. Alternatively or additionally, the device may include electromagnet(s) included in one of the coupling parts and permanent magnets included in the other of the coupling parts.

In some embodiments, the at least part of the magnet assembly is moveably mounted relative to the shaft so that said displacement of the at least part of the magnet assembly relative to the axis comprises displacement in a first dimension and/or in a second dimension perpendicular to the first dimension. Thus, the at least part of the magnet assembly may be guided along the first and/or second dimensions towards alignment with the further coupling part.

Alternatively or additionally, the at least part of the magnet assembly may be moveably mounted relative to the shaft to allow at least radial displacement of the at least part of the magnet assembly with respect to, in other words towards and/or away from, the axis. Thus, the at least part of the magnet assembly may be moved radially away from/towards the axis in order to assist alignment of the magnetic coupling part with the further coupling part.

In some embodiments, the at least part of the magnet assembly is arranged so that said displacement of the at least part of the magnet assembly relative to the axis is responsive to positioning of the further coupling part relative to the magnetic coupling part to define the magnetic coupling. Thus, the at least part, e.g. the entirety, of the magnet assembly may be automatically displaced based on positioning of the further coupling part.

In some embodiments, moveable magnets of the magnet assembly may arrange themselves, in other words automatically arrange themselves, on a circular pitch of magnets of a further magnet assembly included in the further coupling part.

More generally, the moveable mounting can be implemented in any suitable manner provided that the moveable mounting is compatible with the magnet assembly and the shaft being keyed, in other words mechanically constrained, to each other such that the magnet assembly is rotatable together with said rotation of the shaft, including when the at least part of the magnet assembly is displaced relative to the axis.

In some embodiments, the moveable mounting of the at least part of the magnet assembly relative to the shaft comprises at least one elongate slot, with a slider being slidably located in each of the at least one elongate slot to enable linear translation of the at least part of the magnet assembly relative to the axis. In such embodiments, the at least one elongate slot may, for example, comprise a pair of elongate slots that extend perpendicularly relative to each other.

A first elongate slot of the pair of elongate slots may extend in the first dimension, and thus permit displacement of the at least part of the magnet assembly in the first dimension via sliding of a first slider along the first elongate slot. Moreover, a second elongate slot of the pair of elongate slots may extend in the second dimension, and thus permit displacement of the at least part of the magnet assembly in the second dimension via sliding of a second slider along the second elongate slot.

In some embodiments, the device comprises a holder delimiting cavities that each receive a magnet of the magnet assembly.

The holder may be formed from any suitable material, such as from one or more of aluminum, austenitic stainless steel and plastic.

In some embodiments, moveable mounting of the at least part of the magnet assembly relative to the shaft may comprise one or more of the magnets being moveable within their respective cavity.

In such embodiments, the magnet(s) may be moveable in numerous directions within their respective cavity.

In some embodiments, the device comprises a support member to which magnets of the magnet assembly are fixed, the support member and the shaft being keyed to each other such that the support member and the magnets fixed thereto are rotatable together with said rotation of the shaft. This may provide a relatively straightforwardly implementable way of keying the magnet assembly to the shaft.

In such embodiments, the support member may be moveably mounted relative to the shaft to allow collective displacement of the magnets relative to the axis. This may provide a convenient way of moveably mounting magnets of the magnet assembly to the shaft.

It is noted that the support member and the shaft may be keyed to each other such that the support member and the magnets fixed thereto are rotatable together with said rotation of the shaft, including when the magnets are collectively displaced relative to the axis.

In other embodiments, the magnets of the magnet assembly are arranged to move independently of each other, with each magnet moving freely in its movement area.

When the magnets are arranged to move independently of each other, only one magnet at a time may be optimally positioned to transfer force. The other magnets can transfer less to zero force. In this case the total coupling capacity is decreased, and the strength of the individual magnets needs to be chosen, in other words increased, accordingly.

In at least some embodiments, the at least part of the magnet assembly is biased into a default configuration in which magnets of the magnet assembly are concentrically arranged about the axis. Thus, the magnets, or the magnet assembly as a whole, may go back to a neutral (perfect alignment) position, if the further coupling part has no attraction to the magnets of the magnet assembly.

In some embodiments, the device includes the further coupling part. Thus, the magnetic coupling part and the further coupling part may conveniently be supplied together with each other to the user.

As briefly mentioned above, the further coupling part may include a further magnet assembly for magnetically coupling to the magnet assembly.

The further coupling part may also include a further shaft rotatable about a further axis extending along the further shaft.

The further shaft may, for example, mechanically couple the device implement or the motor assembly to the further magnet assembly.

Thus, the further coupling part may be a driven or a driving magnetic coupling part.

The further magnet assembly and the further shaft may be keyed to each other such that the further magnet assembly is rotatable together with the rotation of the further shaft.

In some embodiments, at least part of the further magnet assembly is moveably mounted relative to the further shaft to allow displacement of the at least part of the further magnet assembly relative to the further axis.

In such embodiments, the further magnet assembly and the further shaft may be keyed to each other such that the further magnet assembly is rotatable together with said rotation of the further shaft, including when the at least part of the further magnet assembly is displaced relative to the further axis.

It is noted that the various possibilities described herein in respect of moveably mounting the magnet assembly relative to the shaft of the magnetic coupling part are similarly contemplated in relation to moveably mounting the further magnet assembly to the further shaft of the further coupling part.

In some embodiments, the food preparation device includes the device implement. Thus, the device implement may be conveniently supplied to the user along with the magnetic coupling part, and optionally also the further coupling part.

The device implement can be of any suitable type and design. In some embodiments, the device implement is in the form of a food implement, such as a food processing tool, a blender tool, a stirrer tool, a cutter, a dough kneader, a stirrer or a mixer.

Alternatively or additionally, the device implement is in the form of an air circulation fan assembly, e.g. for circulating heated air in a cooking chamber and/or for cooling device components during use of the food preparation device.

The food preparation device may comprise, e.g. alternatively or additionally to the device implement, the motor assembly. Thus, the motor assembly may be conveniently supplied to the user along with the magnetic coupling part, and optionally also the further coupling part and/or the device implement.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a device, in particular a food preparation device, according to an example;
FIG. 2 schematically depicts various alignment and misalignment possibilities for a magnetic coupling;
FIG. 3 provides a schematic plan view of a magnetic coupling part in which magnets are non-moveably arranged;
FIG. 4 provides a schematic plan view for illustrating acceptable misalignment of a magnetic coupling comprising the magnetic coupling part shown in FIG. 3;
FIG. 5 provides a schematic plan view of a magnetic coupling part according to an embodiment of the present disclosure in which magnets of a magnet assembly are displaceable with respect to a rotation axis;
FIG. 6 provides a schematic plan view for illustrating acceptable misalignment of a magnetic coupling comprising the magnetic coupling part shown in FIG. 5;
FIGs. 7A and 7B provide schematic views of a magnetic coupling comprising the magnetic coupling part shown in FIGs. 5 and 6 and a further coupling part whose magnets are also displaceable with respect to a (further) rotation axis;
FIGs. 8A and 8B provide schematic views showing moveable magnets of the magnet assembly of the magnetic coupling part shown in FIGs. 5 and 6 arranging themselves on a circular pitch of a further magnet assembly included in a further coupling part;
FIGs. 9A and 9B provide perspective views of a magnetic coupling part and a further coupling part according to an example;
FIGs. 10A to 10D provide various views of a magnetic coupling part and a further coupling part according to another example;
FIGs. 11A and 11B provide views of a magnetic coupling part according to yet another example;
FIGs. 12A and 12B provide views of a magnetic coupling comprising the magnetic coupling part shown in FIGs. 11A and 11B; and
FIGs. 13A and 13B provide views of a magnetic coupling part according to a further example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a device, e.g. a food preparation device, comprising a magnetic coupling part for magnetically coupling to a further coupling part to define a magnetic coupling suitable for transferring drive from a motor assembly. The magnetic coupling part comprises a magnet assembly for magnetically coupling to the further coupling part, and a shaft rotatable about an axis extending along the shaft. At least part of the magnet assembly is moveably mounted relative to the shaft to allow displacement of the at least part of the magnet assembly relative to, e.g. radially away from, the axis. The magnet assembly and the shaft are keyed to each other such that the magnet assembly is rotatable together with said rotation of the shaft, including when the at least part of the magnet assembly is displaced relative to the axis.

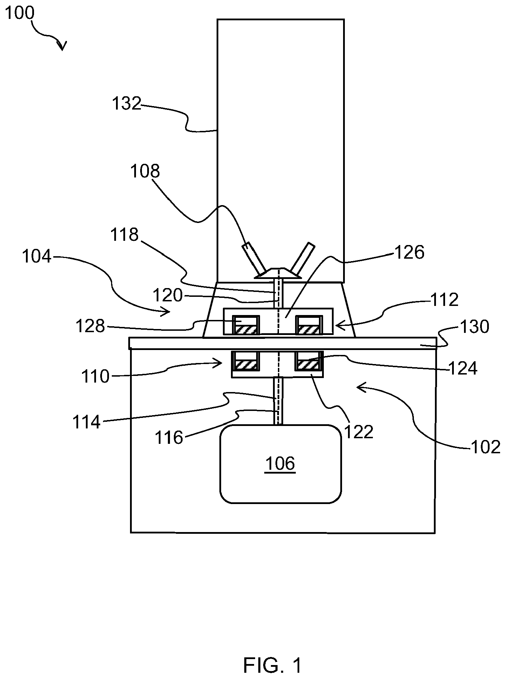

FIG. 1 schematically depicts a device 100, in this example a device 100 in the form of a food preparation device 100, that comprises a magnetic coupling part 102 for coupling to a further coupling part 104 to define a magnetic coupling 102, 104 for transferring drive from a motor assembly 106.

In the case of the device 100 being a food preparation device 100, the magnetic coupling 102, 104 may transfer drive from the motor assembly 106 to move, e.g. rotate, a device implement 108, such as a food implement for contacting and processing food.

This may be achieved, for example, by the motor assembly 106 driving rotation of the magnetic coupling part 102, and the rotation of the magnetic coupling part 102 causing, via magnetic interaction with the further coupling part 104, rotation of the further coupling part 104.

The further coupling part 104 may be mechanically coupled to the device implement 108 so that the rotation of the further coupling part 104 causes movement, e.g. rotation, of the device implement 108.

The device implement 108 can be of any suitable type and design. In some embodiments, the device implement 108 is in the form of a food processing tool, a blender tool, a stirrer tool, a cutter, a dough kneader, a stirrer, a mixer or an air circulation fan assembly.

In embodiments in which the device implement 108 comprises, e.g. is, an air circulation fan assembly, the air circulation fan assembly may be arranged to circulate heated air in a cooking chamber.

In such embodiments, the cooking chamber may be included, for example, in an air fryer whose air circulation fan assembly is arranged proximal to the bottom of the cooking chamber.

Such positioning of the air circulation fan assembly may facilitate driving of the air circulation fan assembly via a base-mounted magnetic coupling part 102 of the type shown in FIG. 1.

A non-limiting example of an air fryer whose air circulation fan assembly is arranged proximal to the bottom of the cooking chamber is disclosed in, for example, WO 2022/129100 A1.

The air circulation fan assembly may alternatively or additionally be arranged to circulate cooling air, for example for cooling device components during operation of the food preparation device 100.

As schematically shown in FIG. 1, the magnetic coupling part 102 comprises a magnet assembly 110 for magnetically coupling to the further coupling part 104, for example to a further magnet assembly 112 included in the further coupling part 104.

The magnetic coupling part 102 also includes a shaft 114 rotatable about an axis 116 extending along the shaft 114. The magnet assembly 110 and the shaft 114 are keyed to each other such that the magnet assembly 110 is rotatable together with said rotation of the shaft 114.

In some embodiments, such as shown in FIG. 1, the magnet assembly 110 and the shaft 114 being keyed to each other may enable the shaft 114 to transfer drive from the motor assembly 106 to the magnet assembly 110 in order to rotate the magnet assembly 110.

The further coupling part 104 may include a further shaft 118 rotatable about a further axis 120. In such embodiments, the further magnet assembly 112 and the further shaft 118 may be keyed to each other such that the further magnet assembly 112 is rotatable together with said rotation of the further shaft 118.

In some embodiments, such as shown in FIG. 1, the further magnet assembly 112 and the further shaft 118 being keyed to each other may enable the further shaft 118 to transfer rotation of the further magnet assembly 112 to the device implement 108 in order to move, e.g. rotate, the device implement 108.

It is noted that the magnetic coupling part 102 may include a holder 122 for holding magnetic material, e.g. permanent magnets 124, of the magnet assembly 110.

The further coupling part 104 may include a further holder 126 for holding magnetic material, e.g. permanent magnets 128, of the further magnet assembly 112.

The holder 122 and the further holder 126 may be formed from any suitable material, such as from one or more of aluminum, austenitic stainless steel and plastic.

In embodiments, such as shown in FIG. 1, in which the magnetic coupling part 102 is driven by the motor assembly 106, and the magnetic coupling part 102 drives rotation of the further coupling part 104, the magnetic coupling part 102 can be regarded as a driving part that transfers torque via magnetic attraction to a driven/follower part in the form of the further coupling part 104.

The magnetic interaction between the magnetic coupling part 102 and the further coupling part 104 may provide contactless driving of the device implement 108 by the motor assembly 106, for instance so that moving parts of the magnetic coupling part 102 do not come into contact with moving part(s) mechanically connected to the device implement 108.

In other words, no physical contact is necessary between the magnetic coupling part 102 and the further coupling part 104.

The stronger the interaction between the magnetic coupling part 102 and the further coupling part 104, the greater the torque that can be transferred.

The interaction can be made stronger by, for instance, including more permanent magnets 124, 128, so as to increase the number of magnet pairs 124, 128, and/or by making the magnetic interaction between permanent magnets 124, 128 of each of the magnetic pairs stronger.

Whilst permanent magnets 124, 128 are employed in the example shown in FIG. 1, and permanent magnets 124, 128 are commonly included in the coupling parts 102, 104, in other words driving and driven parts 102, 104, of conventional magnetic couplings, this is not intended to be limiting. In some embodiments, the device 100 may include electromagnet(s) included in one of the coupling parts 102, 104 and permanent magnets included in the other of the coupling parts 104, 102.

In some embodiments, such as shown in FIG. 1, the food preparation device 100 comprises a support base 130 on which a utensil 132 that includes, e.g. contains, the device implement 108 is supportable. In such embodiments, the support base 130 is configured to enable the magnetic interaction between the magnetic coupling part 102 and the further coupling part 104 through the support base 130.

Thus, the support base 130 may keep moving parts, e.g. the first and second magnet assemblies 110, 112, of the magnetic coupling 102, 104 apart from each other.

Implicit in the support base 130 allowing the magnetic interaction between the magnetic coupling part 102 and the further coupling part 104 therethrough is that the support base 130 is formed from a magnetically permeable material, such as from one or more of glass, aluminum, austenitic stainless steel and plastic. Particular mention is made of the support base 130 being formed from glass. Glass may have various benefits in addition to being magnetically permeable, such as being compatible with induction heating, being relatively easy to clean, etc.

Any suitable glass, e.g. glass-ceramic, can be used to form the support base 130, for example Ceran^{®} glass from Schott Ceran.

More generally, the food preparation device 100 may include a heating element for enabling the food preparation device 100 to heat food.

Thus, the food preparation device 100 may combine, for example, physical manipulation of food via the magnetic coupling 102, 104 with heating of the food. It is also noted that the contactless coupling with the motor assembly 106 provided by the magnetic coupling 102, 104 may enable a receptacle, such as pot, pan, mug, etc., to be heated by the heating element even when a magnetically couplable food utensil is not being used. Thus, the food preparation device 100 can be used in combination with, for example, existing kitchenware.

The heating element may be of any suitable type. In some embodiments, the heating element comprises, e.g. is, an induction heating element.

For example, the heating element may include an induction coil arranged beneath the support base 130, e.g. glass support base 130.

Such an induction heating element/induction coil may enable food to be heated with minimal impact of operation of the induction heating element on functioning of moving parts, such as the motor assembly 106 and the magnetic coupling 102, 104. This is because induction heating does not rely on conduction of heat generated in the induction heating element itself.

The heating element may be arranged around the magnetic coupling 102, 104, for example, by the induction coil of the induction heating element being arranged around the magnetic coupling 102, 104.

This may enable the heating functionality to be incorporated into the food preparation device 100 in a spatially efficient manner.

Exterior surfaces of the food preparation device 100 may all be reachable to facilitate cleaning of the exterior of the food preparation device 100. To this end, the external surface of the support base 130 may be a flat surface, e.g. a flat glass surface, and/or the food preparation device 100 may be free of any mechanical interface for mechanically engaging/locking the support base 130 and the utensil 132 to each other.

More generally, the capability to couple and decouple the magnetic coupling part 102 and the further coupling part 104 by simply moving one of these coupling parts 102, 104 towards and away from the other of these coupling parts 104, 102 respectively, e.g. by placing the utensil 132 on the support base 130 and lifting the utensil 132 off the support base 130, may make the device 100 relatively straightforward to use.

However, there may be a risk of the magnetic coupling part 102 and the further coupling part 104 being misaligned when the user wishes to couple the magnetic coupling part 102 and the further coupling part 104 to define the magnetic coupling 102, 104.

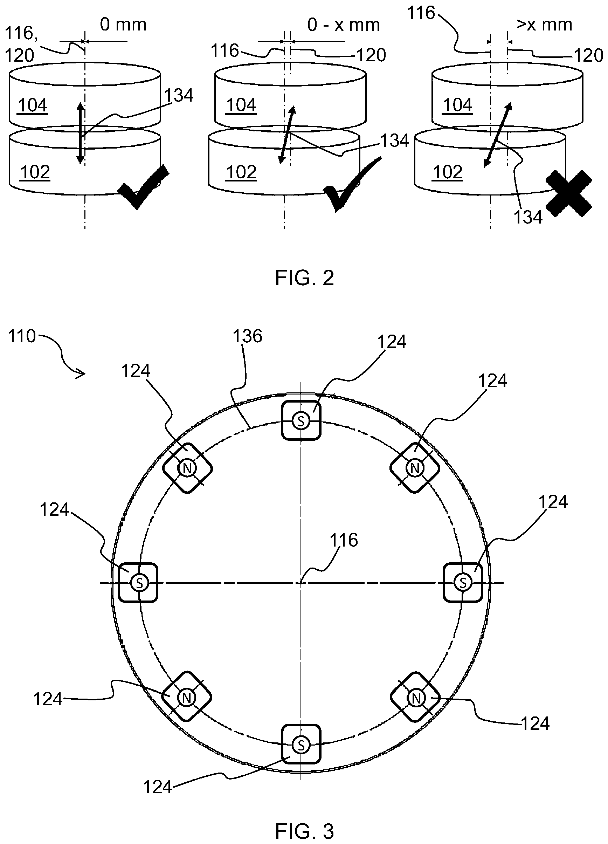

The left hand pane of FIG. 2 schematically depicts optimal alignment of the magnetic coupling part 102 and the further coupling part 104, the middle pane of FIG. 2 schematically depicts an acceptable radial misalignment of the magnetic coupling part 102 and the further coupling part 104, and the right hand pane of FIG. 2 schematically depicts unacceptable radial misalignment of the magnetic coupling part 102 and the further coupling part 104.

The double-headed arrows 134 in FIG. 2 denote a force direction on bearings of the magnetic coupling part 102 and the further coupling part 104. FIG. 2 illustrates that if the misalignment is too large, the coupling or torque transfer will not take place. With a relatively small misalignment torque may be transferred, but with unwanted forces 134 potentially being exerted on the bearings. The smaller the misalignment the better in terms of assembly, function and lifetime of the device 100.

FIG. 3 illustrates a magnet assembly 110 whose permanent magnets 124 are distributed around the axis 116, with north poles of neighboring permanent magnets 124 being orientated in opposite directions relative to each other. The "N" and "S" in FIG. 3 denote north and south poles of the permanent magnets 124, with the circles surrounding the "N" or "S" denoting centers of the permanent magnets 124. The permanent magnets 124 are arranged, in this illustration non-moveably arranged, on a circular pitch 136.

The further magnet assembly 112 of the further coupling part 104 may have the same, or at least substantially the same, circular pitch 136 on which also an even number of permanent magnets 128, albeit not necessarily the same number as the number of permanent magnets 124, are positioned.

When the permanent magnets 124 are not moveably positioned and hence have a fixed position on the circular pitch 136, the acceptable misalignment of the magnetic coupling part 102 and the further coupling part 104 (see the middle pane of FIG. 2) may, for instance, depend on acceptable misalignment of individual permanent magnets 124 of the magnet assembly 110 with respect to individual permanent magnets 128 of the further magnet assembly 112.

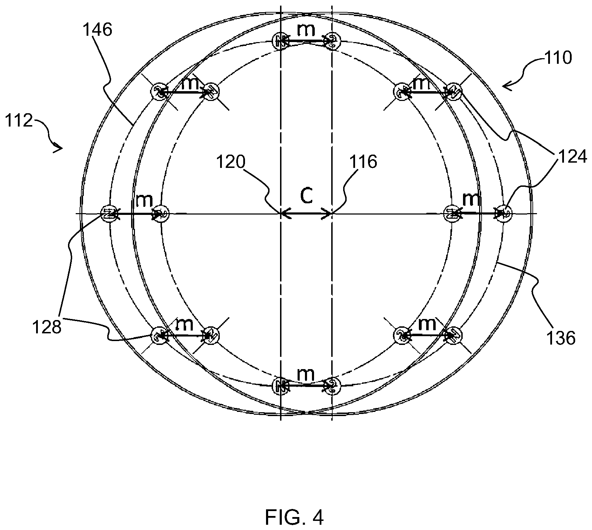

Referring to FIG. 4, the acceptable misalignment of individual permanent magnets 124 of the magnet assembly 110 with respect to individual permanent magnets 128 of the further magnet assembly 112 is denoted by the double-headed arrows labelled "m", and the acceptable misalignment of the magnetic coupling part 102 and the further coupling part 104 is denoted by the double-headed arrow labelled "C".

A user of the device 100, e.g. food preparation device 100, that makes uses of the magnetic coupling 102, 104 may wish to position the magnetic coupling part 102 and the further coupling part 104 on or in each other in a way which is intuitive, quick and convenient. Guidance for the positioning, e.g. mechanical guidance, may not be desirable or may not be possible, e.g. for the cleanability-related reasons mentioned above. Moreover, friction between surfaces may hamper perfect self-alignment of the magnetic coupling part 102 and the further coupling part 104.

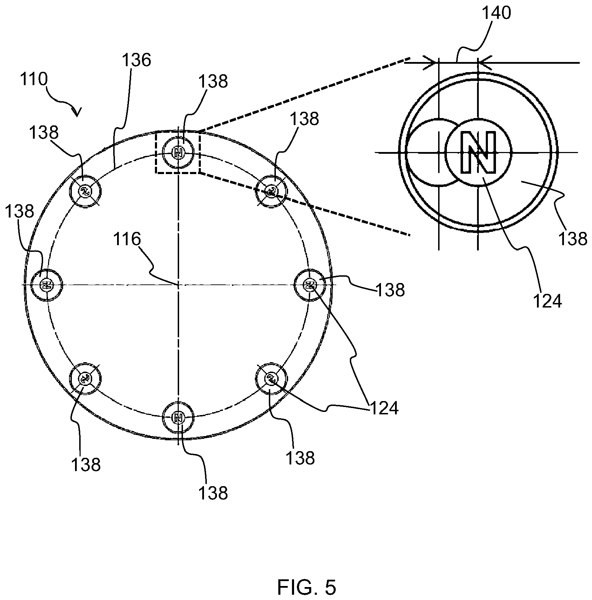

For these reasons, and referring now to FIG. 5, at least part of the magnet assembly 110 is moveably mounted relative to the shaft 114 to allow displacement of the at least part of the magnet assembly 110 relative to the axis 116, e.g. while the shaft 114 and the magnet assembly 110 remain keyed to each other.

Moveably mounting the at least part of the magnet assembly 110 relative to the shaft 114 in this manner may allow a larger tolerance, in other words a larger acceptable misalignment, when the user positions the magnetic coupling part 102 and the further part 104 on or in each other to define the magnetic coupling 102.

This may make the device 100 more convenient to use and/or may assist to minimize decrease of performance and operating lifetime of the device 100.

For example, magnets 124 of the magnetic coupling part 102 may move relative to the axis 116 to compensate for misalignment.

In some embodiments, and with continued reference to FIG. 5, magnets 124 of the magnet assembly 110 may be moveable in a movement area 138.

In such embodiments, with every rotation of the magnetic coupling 102, 104, each magnet 124 of the magnet assembly 110 may move around in its movement area 138.

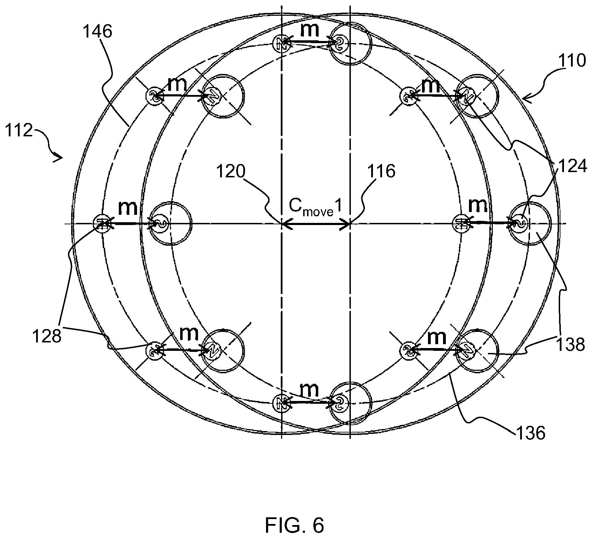

A maximum displacement 140 of each magnet 124 in the movement area 138 is represented in the inset of FIG. 5. In such embodiments, and referring now to FIG. 6, the acceptable misalignment is increased by the maximum displacement 140 of each magnet 124. In particular, Cₘₒᵥₑ1 is equal to the sum of "m" (see FIG. 4) and the maximum displacement 140 of each magnet 124.

This illustrates the above-mentioned larger tolerance, in other words larger acceptable misalignment, when the user positions the magnetic coupling part 102 and the further part 104 on or in each other to define the magnetic coupling 102.

The tolerance may be further increased by at least part of the further magnet assembly 112 being moveably mounted relative to the further shaft 118 to allow displacement of the at least part of the further magnet assembly 112 relative to the further axis 120, e.g. while the further shaft 118 and the further magnet assembly 112 remain keyed to each other.

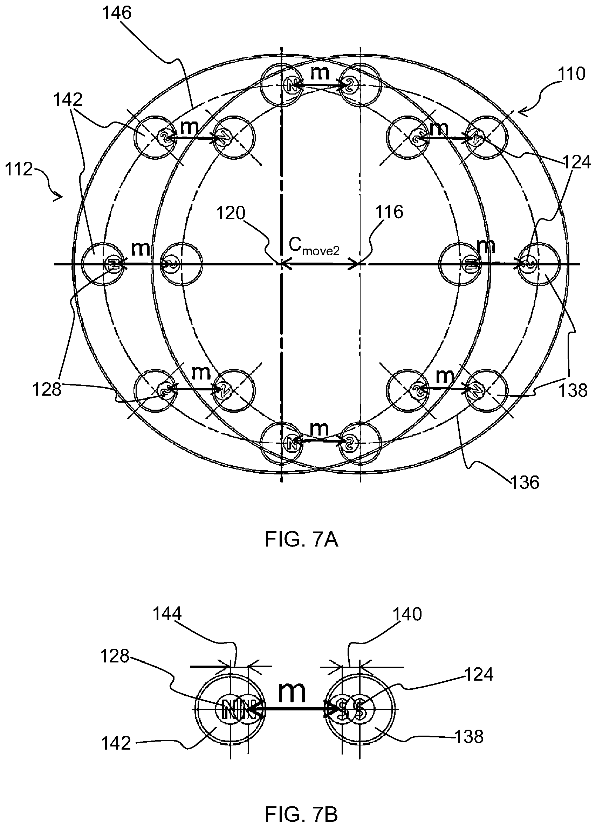

For example, and referring now to FIGs. 7A and 7B, magnets 124 of the magnetic coupling part 102 may move relative to the axis 116 and also magnets 128 of the further coupling part 104 may move relative to the further axis 120 to compensate for misalignment.

A maximum displacement 144 of each magnet 128 in the movement area 142 is represented in the enlarged view provided by FIG. 7B.

In such embodiments, with every rotation of the magnetic coupling 102, 104, each magnet 124 of the magnet assembly 110 and each magnet 128 of the further magnet assembly 112 may move around in its respective movement area 138, 142.

The acceptable misalignment may be increased by the maximum displacement 140 of each magnet 124 of the magnet assembly 110 and the maximum displacement 144 of each magnet 128 of the further magnet assembly 112. In particular, Cₘₒᵥₑ2 is equal to the sum of "m" (see FIG. 4) and the maximum displacement 140 of each magnet 124 of the magnet assembly 110 and the maximum displacement 144 of each magnet 128 of the further magnet assembly 112.

The at least part of the magnet assembly 110 may be arranged so that said displacement of the at least part of the magnet assembly 110 relative to the axis 116 is responsive to positioning of the further coupling part 104 relative to the magnetic coupling part 102 to define the magnetic coupling 102, 104. Thus, the at least part, e.g. the entirety, of the magnet assembly 110 may be automatically displaced based on positioning of the further coupling part 104.

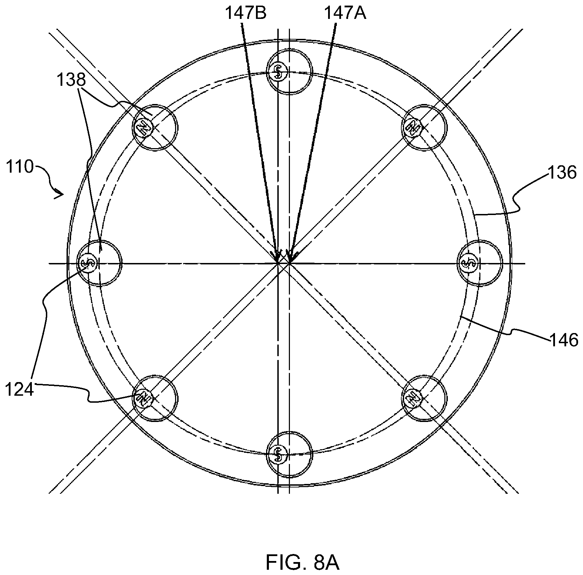

For example, and as represented in FIG. 8A, the moveable magnets 124 of the magnet assembly 110 may arrange themselves on a (further) circular pitch 146 of the further magnet assembly 112.

In more general terms, moveable magnets 124, 128 of one of the magnet assembly 110 and the further magnet assembly 112 may arrange themselves on the circular pitch 136, 146 of the other of the magnet assembly 110 and the further magnet assembly 112.

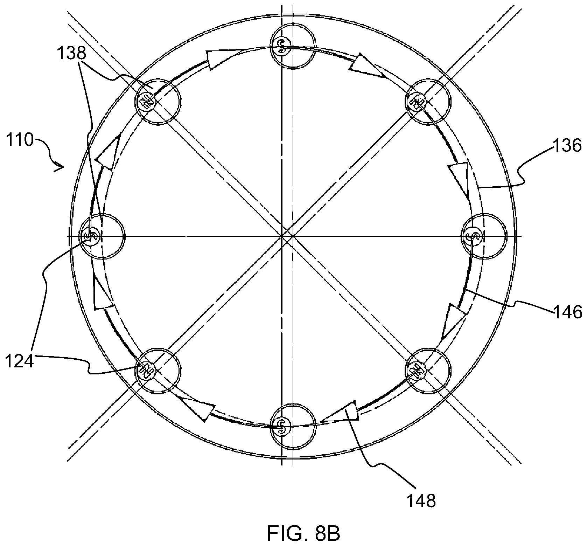

It is noted that one of the arrows in FIG. 8A points to a misaligned axis center point 147A in the illustrated example. The other of the arrows in FIG. 8 points to a center point 147B of the circular pitch of the displaced magnets 124 in the illustrated example.

Referring to FIG. 8B, the magnets 124 apply force on the further magnet assembly 112 of the misaligned further coupling part 104 in a direction of rotation 148.

In at least some embodiments, the at least part of the magnet assembly 110 is moveably mounted relative to the shaft 114 to allow at least radial displacement of the at least part of the magnet assembly 110 with respect to, e.g. towards and away from, the axis 116.

Alternatively or additionally, the at least part of the further magnet assembly 112 may be moveably mounted relative to the further shaft 120 to allow at least radial displacement of the at least part of the further magnet assembly 112 with respect to, e.g. towards and away, from the further axis 120.

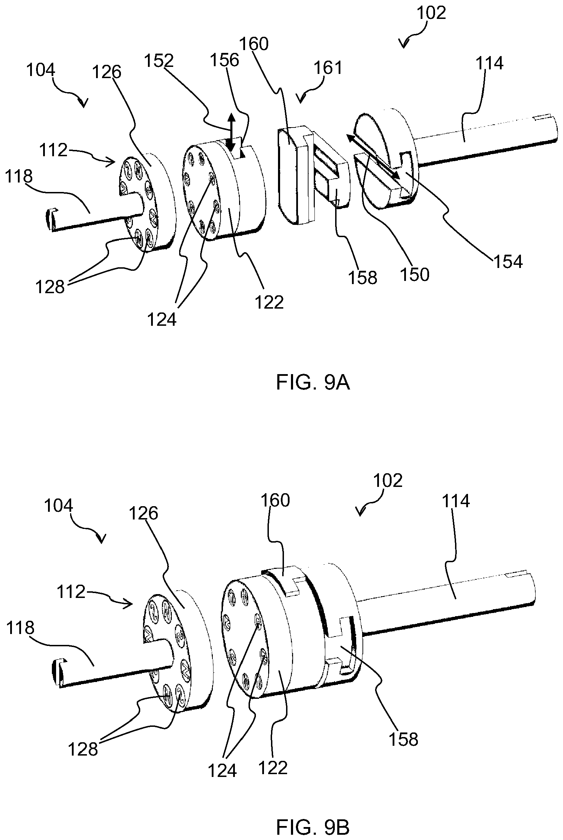

In some embodiments, and referring now to FIGs. 9A and 9B, the at least part of the magnet assembly 110 is moveably mounted relative to the shaft 114 so that the displacement of the magnet assembly 110 relative to the axis 116 comprises displacement in a first dimension 150 and/or in a second dimension 152 perpendicular to the first dimension 150. Thus, the magnet assembly 110 may be guided along the first and/or second dimensions 150, 152 towards alignment with the further coupling part 104.

Whilst not shown in FIGs. 9A and 9B, the at least part of the further magnet assembly 112 may be moveably mounted relative to the further shaft 118 so that the displacement of the at least part of the further magnet assembly 112 in relation to the further axis 120 comprises displacement in a third dimension and/or in a fourth dimension perpendicular to the third dimension.

The moveable mounting can be implemented in any suitable manner. In some embodiments, such as shown in FIGs. 9A and 9B, the moveable mounting of the magnet assembly 110 relative to the shaft 114 comprises at least one elongate slot 154, 156, with a slider 158, 160 being slidably located in each of the at least one elongate slot 154, 158 to enable linear translation of the magnet assembly 110 relative to the axis 116.

In some embodiments, such as shown in FIGs. 9A and 9B, the at least one elongate slot 154, 156 comprises a pair of elongate slots 154, 156 that extend perpendicularly relative to each other.

In such embodiments, a first elongate slot 154 of the pair of elongate slots 154, 156 may extend in the first dimension 150, and thus permit displacement of the magnet assembly 110 in the first dimension 150 via sliding of a first slider 158 along the first elongate slot 154. Moreover, a second elongate slot 156 of the pair of elongate slots 154, 156 may extend in the second dimension 152, and thus permit displacement of the magnet assembly 110 in the second dimension 152 via sliding of a second slider 160 along the second elongate slot 156.

It is noted that the moveable mounting of the at least part of the further magnet assembly 112 relative to the further shaft 118 may alternatively or additionally comprise at least one further elongate slot, with a further slider being slidably located in each of the at least one further elongate slot to enable linear translation of the at least part of the further magnet assembly 112 relative to the further axis 120.

In such embodiments, the at least one further elongate slot may, for example, comprises a pair of further elongate slots that extend perpendicularly relative to each other.

The holder 122 (and/or further holder 126), in which the magnets 124 are fixated, may be radially-moveably connected to the (respective) shaft 114, 118.

The slider 158, 160 can move in two back and forward directions that are perpendicular to each other and perpendicular to the respective axis 116, 120 of the misaligned coupling part 102, 104.

The slider 158, 160 may be designed in such a way that no axial movement of the magnets 124, 128 along the respective axis 116, 120 is possible.

It is noted that the two T-shaped sliders 158, 160 of the intermediate element 161 and the two complementary slots 154, 156 shown in FIGs. 9A and 9B can be arranged in alternative ways, for example with complementary slots or one complementary slot being provided in the intermediate element 161 and the T-shaped slider being provided in the other parts.

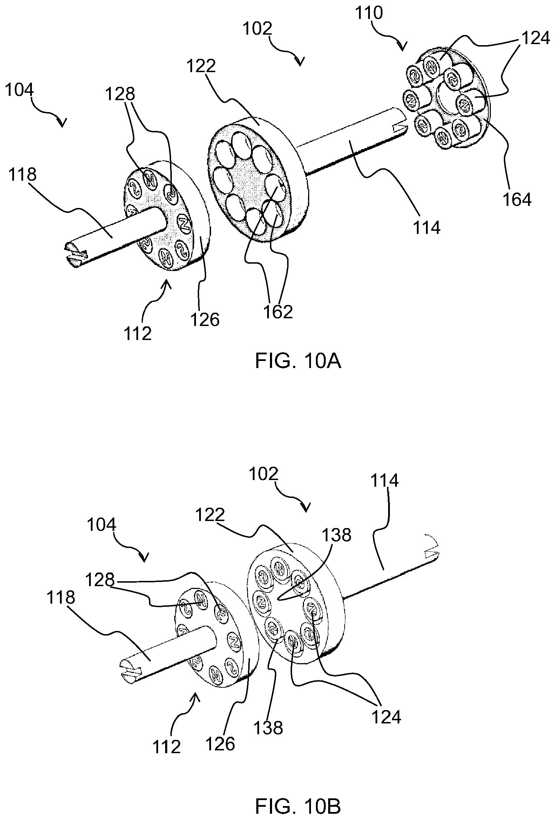

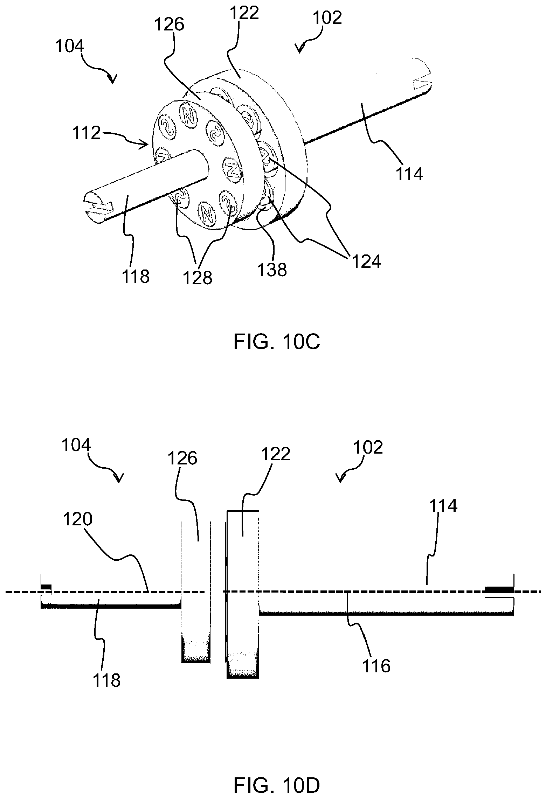

In some embodiments, such as shown in FIGs. 10A to 10D, the holder 122 delimits cavities 162 that each receive a magnet 124 of the magnet assembly 110. In such embodiments, the moveable mounting of the at least part of the magnet assembly 110 relative to the shaft 114 may comprise one or more of the magnets 124 being moveable within their respective cavity 162.

Alternatively or additionally, the magnetic coupling part 102 may include a support member 164 to which magnets 124 of the magnet assembly 110 are fixed, with the support member 164 and the shaft 114 being keyed to each other such that the support member 164 and the magnets 124 fixed thereto are rotatable together with the rotation of the shaft 114.

For example, and referring to FIGs. 10A to 10D, the support member 164 may cooperate with the holder 122 so that the magnets 124 fixed to the support member 164 are moveably received with the cavities 162 delimited by the holder 122.

In some embodiments, such as shown in FIGs. 10A to 10D, the support member 164 is moveably mounted relative to the shaft 114 to allow collective displacement of the magnets 124 relative to the axis 116 while the support member 164 and the shaft 114 remain keyed to each other.

Such embodiments may be regarded as examples in which magnets 124 are connected to each other in a connecting part, in other words the support member 164, that has a movement area.

To transfer the torque from all the magnets 124 onto the misaligned further coupling part 104, the magnets 124 are fixated in the support member 164. The support member 164 can move in its movement area. At the contact point(s) between the support member 164 and the holder 122, the total force is transferred.

Whilst not shown in FIGs. 10A to 10D, the further holder 126 may delimit (further) cavities that each receive a magnet 128 of the further magnet assembly 112. In such embodiments, the moveable mounting of the at least part of the further magnet assembly 112 relative to the further shaft 118 may comprise the magnets 128 being moveable within the further cavities.

The further coupling part 104 may include a further support member to which magnets 128 of the further magnet assembly 112 are fixed, with the further support member and the further shaft 118 being keyed to each other such that the further support member and the magnets 128 fixed thereto are rotatable together with the rotation of the further shaft 118.

For example, the further support member may cooperate with the further holder 126 so that the magnets 128 fixed to the further support member are moveably received with the further cavities delimited by the further holder 126.

In some embodiments, such as shown in FIGs. 9A to 10D, the magnet assembly 110 is biased into a default configuration in which magnets 124 of the magnet assembly 110 are concentrically arranged about the axis 116. Thus, the magnets 124, or the magnet assembly 110 as a whole, may go back to a neutral (perfect alignment) position, if the further coupling part 104 has no attraction to the magnets 124 of the magnet assembly 110.

This may be assisted, for example, by the shapes of the support member 164 and the holder 122.

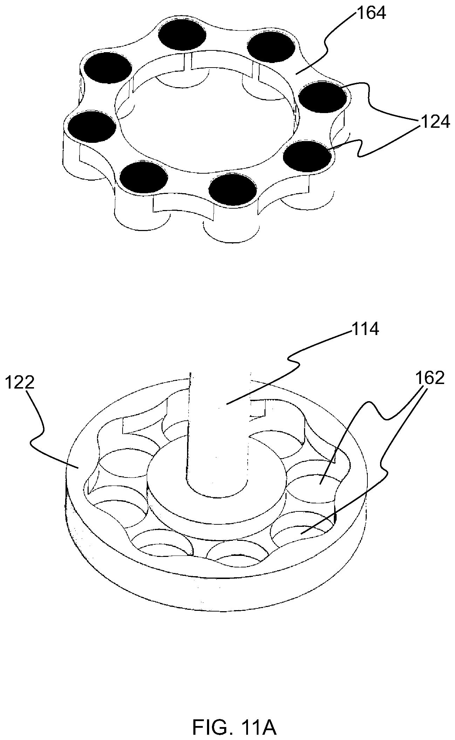

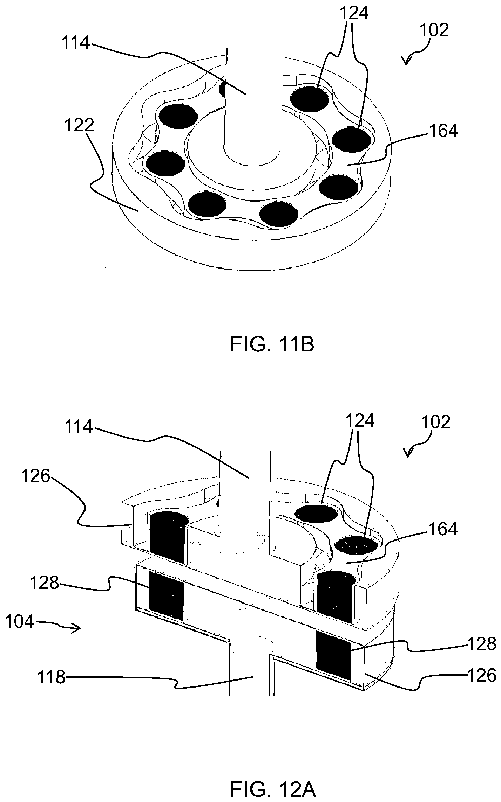

In some embodiments, such as shown in FIGs. 11A and 11B, the support member 164 has a lobal shape and the holder 122 delimits a complementarily shaped lobal cavity that receives the support member 164 in a way that allows lobes of the support member 164 to be free to move within respective lobes of the lobal cavity.

The lobes of the support member 164 may nonetheless be retained within respective lobes of the lobal cavity.

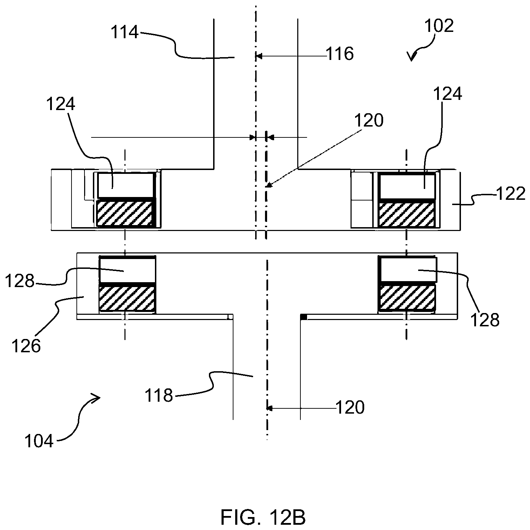

Referring to FIGs. 12A and 12B, the magnetic coupling part 102 shown in FIGs. 11A and 11B is shown coupled to a further coupling part 104. Moreover, FIG. 12B shows acceptable misalignment between the driven and driving axes 116, 120 of the coupling parts 102, 104. This acceptable misalignment is greater due to the moveably mounted magnet assembly 110, as previously described.

The increase in the acceptable misalignment may be the same as "half of the maximum movement of the magnet assembly 110 in the cavity".

If both coupling parts 102, 104 have a moveable magnet assembly 110, 112, the acceptable misalignment will even be bigger, as also described herein above.

It is generally noted that the magnets 124, 128 may be connected with each other in at least one of the coupling parts 102, 104.

The circular pitch of the magnet assembly 110 is preferably the same as that of the further magnet assembly 112.

It is also reiterated that the magnet assembly 110 has a limited movement area 138 with respect to the axis 116 of the coupling part 102.

Whilst the embodiments shown in FIGs. 9A to 12B involve magnets 124 moving together with each other, e.g. due to being fixed to a common support member 164, this is not intended to be limiting. In other embodiments, the magnets 124 are arranged to move independently of each other, with each magnet 124 moving freely in its movement area 138.

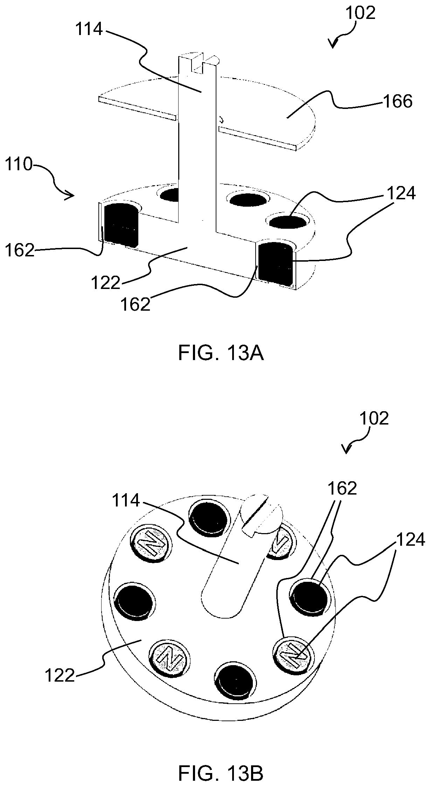

In such embodiments, and referring now to FIGs. 13A and 13B, the magnets 124 may be free to move within their respective cavities 162 but may be retained within the cavities by one or more cover members 166 that cooperate(s) with the holder 122.

When the magnets 124 are arranged to move independently of each other, only one magnet 124 at a time may be optimally positioned to transfer force. The other magnets 124 can transfer less to zero force. In this case the total coupling capacity is decreased, and the strength of the individual magnets 124 needs to be chosen, in other words increased, accordingly.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A food preparation device (100) comprising:
a magnetic coupling part (102) for magnetically coupling to a further coupling part (104) to define a magnetic coupling (102, 104) suitable for transferring drive from a motor assembly (106) to move a device implement (108), the magnetic coupling part comprising:
a magnet assembly (110) for magnetically coupling to the further coupling part; and
a shaft (114) rotatable about an axis (116) extending along the shaft, wherein at least part of the magnet assembly is moveably mounted relative to the shaft to allow displacement of the at least part of the magnet assembly relative to the axis, the magnet assembly and the shaft being keyed to each other such that the magnet assembly is rotatable together with said rotation of the shaft, including when the at least part of the magnet assembly is displaced relative to the axis.

2. The food preparation device (100) according to claim 1, wherein the at least part of the magnet assembly (110) is moveably mounted relative to the shaft (114) so that said displacement of the at least part of the magnet assembly relative to the axis (116) comprises displacement in a first dimension (150) and/or in a second dimension (152) perpendicular to the first dimension.

3. The food preparation device (100) according to claim 1 or claim 2, wherein the at least part of the magnet assembly (110) is moveably mounted relative to the shaft (114) to allow at least radial displacement of the at least part of the magnet assembly with respect to the axis (116).

4. The food preparation device (100) according to any one of claims 1 to 3, wherein the at least part of the magnet assembly (110) is arranged so that said displacement of the at least part of the magnet assembly relative to the axis (116) is responsive to positioning of the further coupling part (104) relative to the magnetic coupling part (102) to define the magnetic coupling (102, 104).

5. The food preparation device (100) according to any one of claims 1 to 4, wherein the moveable mounting of the at least part of the magnet assembly (110) relative to the shaft (114) comprises at least one elongate slot (154, 156), a slider (158, 160) being slidably located in each of the at least one elongate slot to enable linear translation of the at least part of the magnet assembly relative to the axis (116); optionally wherein the at least one elongate slot comprises a pair of elongate slots that extend perpendicularly relative to each other.

6. The food preparation device (100) according to any one of claims 1 to 5, comprising a holder (122) delimiting cavities (162) that each receive a magnet (124) of the magnet assembly (110), wherein said moveable mounting of the at least part of the magnet assembly relative to the shaft (114) comprises one or more of the magnets being moveable within their respective cavity.

7. The food preparation device (100) according to any one of claims 1 to 6, comprising a support member (164) to which magnets (124) of the magnet assembly (110) are fixed, the support member and the shaft (114) being keyed to each other such that the support member and the magnets fixed thereto are rotatable together with said rotation of the shaft.

8. The food preparation device (100) according to claim 7, wherein the support member (164) is moveably mounted relative to the shaft (114) to allow collective displacement of the magnets (124) relative to the axis (116).

9. The food preparation device (100) according to any one of claims 1 to 8, wherein the magnet assembly (110) is biased into a default configuration in which magnets (124) of the magnet assembly are concentrically arranged about the axis (116).

10. The food preparation device (100) according to any one of claims 1 to 9, comprising the further coupling part (104).

11. The food preparation device (100) according to claim 10, wherein the further coupling part (104) comprises:
a further magnet assembly (112) for magnetically coupling to the magnet assembly (110);
and a further shaft (118) rotatable about a further axis (120) extending along the further shaft, the further magnet assembly and the further shaft being keyed to each other such that the further magnet assembly is rotatable together with said rotation of the further shaft.

12. The food preparation device (100) according to claim 11, wherein at least part of the further magnet assembly (112) is moveably mounted relative to the further shaft (118) to allow displacement of the at least part of the further magnet assembly relative to the further axis (120), the further magnet assembly and the further shaft being keyed to each other such that the further magnet assembly is rotatable together with said rotation of the further shaft, including when the at least part of the further magnet assembly is displaced relative to the further axis.

13. The food preparation device (100) according to any one of claims 1 to 12, comprising the device implement (108); optionally wherein the device implement is a food processing tool, a blender tool, a stirrer tool, a cutter, a dough kneader, a stirrer, a mixer or an air circulation fan assembly.

14. The food preparation device (100) according to any one of claims 1 to 13, comprising the motor assembly (106).

15. The food preparation device (100) according to claim 14, wherein the shaft (114) is arranged to mechanically couple the motor assembly (106) to the magnet assembly (110).
